Europäisches Patentamt

European Patent Office

Office européen des brevets

(11) Numéro de publication : **0 394 090 B1**

(12) **FASCICULE DE BREVET EUROPEEN**

(45) Date de publication du fascicule du brevet :
16.06.93 Bulletin 93/24

(51) Int. Cl.[5] : **C08J 3/03**, // C08K5/09,
C03C25/02 , C08L51:06

(21) Numéro de dépôt : **90400963.6**

(22) Date de dépôt : **10.04.90**

(54) **Emulsion aqueuse à base de polyoléfines greffées, procédé d'obtention et emploi, notamment dans les compositions d'apprêt.**

(30) Priorité : **19.04.89 FR 8905187**

(43) Date de publication de la demande :
**24.10.90 Bulletin 90/43**

(45) Mention de la délivrance du brevet :
**16.06.93 Bulletin 93/24**

(84) Etats contractants désignés :
**AT BE CH DE DK ES FR GB GR IT LI LU NL SE**

(56) Documents cités :
**EP-A- 0 246 729
WO-A-85/03511
FR-A- 2 448 514
DATABASE CHEMICAL ABSTRACTS
(HOST:STN), vol. 98, no. 4, 1981, résumé no.
17601t, Columbus, Ohio, US
DATABASE WPI, no. 68-96236p, Derwent
Publications Ltd, London, GB;**

(73) Titulaire : **VETROTEX SAINT-GOBAIN
10, place Pierre de Coubertin
F-73000 Chambéry (FR)**

(72) Inventeur : **Arpin, Michel
119, rue de la Paquerette
F-73290 La Motte Servolex (FR)**
Inventeur : **Petit, Paul
446, Rue Auguste Renoir
F-73290 La Motte Servolex (FR)**
Inventeur : **Vagnon, André
25, Allée des Chènes, Caramagne
F-73000 Chambery (FR)**

(74) Mandataire : **Breton, Jean-Claude et al
SAINT-GOBAIN RECHERCHE 39, quai Lucien
Lefranc
F-93300 Aubervilliers Cedex (FR)**

## Description

La présente invention concerne une émulsion en phase aqueuse à base d'au moins une polyoléfine greffée et son procédé d'obtention. Elle concerne également son utilisation comme constituant d'une composition d'apprêt de fibres telles que des fibres de verre.

Les matières polymères de synthèse sont fréquemment associées aux fibres de verre afin d'obtenir un produit composite dont les propriétés, en particulier les propriétés mécaniques, sont meilleures que celles de la matière polymère non renforcée. C'est notamment le cas des polyoléfines.

Pour renforcer les polyoléfines par des fibres de verre, il est connu de traiter la surface desdites fibres à l'aide d'un apprêt comprenant une émulsion de polyoléfine en phase aqueuse.

Cet apprêt, outre la protection de la surface des fibres de verre qui est une des fonctions classiques de ce traitement, favorise l'adhérence desdites fibres à la matière qu'elles doivent renforcer.

Afin d'optimiser la compatibilité entre l'apprêt recouvrant les fibres et la matrice à renforcer, il est également connu d'utiliser une émulsion à base de polyoléfines de nature voisine de celle des polyoléfines constituant la matrice.

La mise en émulsion des polyoléfines est relativement aisée tant que leur masse moléculaire en poids demeure inférieure à environ 10.000. Il suffit de fondre la polyoléfine en ajoutant des agents émulsifiants convenables tout en agitant. L'émulsion est obtenue en ajoutant ultérieurement l'eau nécessaire. Le brevet FR-A-2 044 805 décrit la réalisation d'une émulsion à base de polypropylènes, selon ce procédé.

Il n'en est plus de même lorsque leur masse moléculaire augmente car, alors, la fluidité des polyoléfines à l'état fondu devient rapidement insuffisante pour obtenir une émulsion. Cette difficulté est encore accrue pour les polyoléfines isotactiques ou syndiotactiques qui présentent une forte tendance à la cristallisation lors de leur refroidissement, phénomène qui constitue une entrave supplémentaire pour obtenir une émulsion. En raison de cette difficulté, les polyoléfines généralement choisies pour être mises en émulsion sont des polyoléfines atactiques ou amorphes.

Plusieurs brevets préconisent différents moyens pour pallier cette difficulté. Ainsi, le brevet FR-A-2 448 514 prévoit d'émulsionner ensemble un polypropylène amorphe et un polypropylène isotactique après avoir fondu leur mélange. La proportion de polypropylène isotactique dans ce mélange demeure égale ou inférieure à 50 %.

Pour obtenir des émulsions à partir de polyoléfines isotactiques à haut poids moléculaire, il est également connu de les dissoudre à chaud dans un solvant organique non miscible dans l'eau, puis d'ajouter l'eau nécessaire. Un tel procédé est décrit, par exemple, dans le brevet FR-A-2 588 263. Ce procédé implique l'élimination ultérieure du solvant par extraction ou par lavage et séchage, ce qui présente certains inconvénients.

La présente invention a pour objet une émulsion à base de polyoléfines greffées qui présentent une masse moléculaire en poids supérieure à 10.000 et dont l'obtention ne se heurte pas aux contraintes et aux difficultés rencontrées antérieurement. L'invention vise un procédé de préparation d'émulsions formées aussi bien de polyoléfines amorphes que de polyoléfines essentiellement cristallines (isotactiques ou syndiotactiques) et évitant l'usage d'un solvant organique.

L'invention a également pour objet une composition d'apprêt pour fibres de verre destinées à renforcer des polyoléfines.

Ces objets sont atteints grâce à l'obtention d'une émulsion aqueuse comprenant un mélange formé d'au moins une polyoléfine greffée qui présente une masse moléculaire en poids supérieure à 10.000 et d'au moins un acide gras saturé et/ou d'au moins un acide gras insaturé non substitué par un groupement hydroxyle, au moins une base, l'eau nécessaire pour obtenir de 10 à 50 % de matières solides et, éventuellement, un agent émulsifiant.

Cette émulsion est obtenue en malaxant ensemble la (ou les) polyoléfine (s) greffée (s) et l' (ou les) acide (s) gras saturé (s) et/ou insaturé (s) à une température supérieure au point de fusion de la (ou des) polyoléfine (s) greffée (s) ; puis en ajoutant au mélange ainsi réalisé au moins une base minérale ou organique et, éventuellement, un agent émulsifiant ; enfin, en agitant l'ensemble sous pression à une température supérieure au point de fusion de la (ou des) polyoléfine (s) puis en refroidissant le mélange à une température inférieure audit point de fusion.

L'invention s'applique tout particulièrement aux polyoléfines greffées dont la masse moléculaire en poids est élevée et/ou dont la structure est essentiellement cristalline.

D'une façon inattendue, le mélange intime par voie mécanique de ce type de polyoléfines et d'un acide gras permet de réduire considérablement la viscosité de ladite polyoléfine à l'état fondu. C'est ainsi que des polyoléfines, dont la masse moléculaire en poids est supérieure à environ 30.000 et qui présentent à l'état fondu une fluidité insuffisante pour être mises en émulsion, peuvent être facilement mises sous cette forme grâce à la présente invention.

D'après l'invention, les mélanges qui donnent une viscosité suffisamment faible pour obtenir une émulsion en phase aqueuse, comprennent pour 100 parties en poids de polyoléfine de 10 à 50 parties en poids d'acides gras et, de préférence, de 15 à 30 parties en poids. Lorsque la teneur en acide (s) gras est inférieure à environ 10 parties en poids, la fluidification de la polyoléfine est insuffisante pour obtenir sa mise en émulsion. Lorsque la masse moléculaire en poids de la polyoléfine est élevée, par exemple supérieure à environ 50.000, même la teneur en acide gras de 10 parties en poids peut se révéler insuffisante. Pour ce type de polyoléfines, il est préférable de les associer à au moins 15 parties en poids d'acide gras.

Pour les polyoléfines aux masses moléculaires très élevées, il peut être nécessaire d'introduire une forte quantité d'acides gras. Toutefois, dans un grand nombre d'applications, la proportion de polyoléfine dans l'émulsion doit demeurer élevée et il est souhaitable que la teneur en acide gras n'excède pas 50 parties en poids.

Les polyoléfines greffées auxquelles s'applique l'invention sont de préférence les polymères de composés éthyléniques comprenant de 2 à environ 6 atomes de carbones, comme par exemple les polyéthylènes, polypropylènes, polybutènes, polyisobutylènes. Les polyoléfines préférées sont les polyéthylènes et les polypropylènes homopolymères ou copolymères.

Les polyoléfines greffées utilisées dans l'invention sont connues. Il s'agit, par exemple, de polypropylènes greffés par des acides ou des anhydrides tels que l'acide (ou l'anhydride) maléique, acrylique, méthacrylique, ou par des oxirannes tels que le méthacrylate ou l'acrylate de glycidyle.

Ces polyoléfines sont malaxées avec des acides gras saturés tels que les acides stéarique, laurique, myristique, ou des acides gras insaturés tels que les acides oléique ou linoléique. Toutefois, tous les acides gras insaturés ne sont pas utilisables dans le cadre de l'invention. Il a été observé en particulier que l'acide ricinoléique, comprenant un groupement hydroxyle substitué, ne permet pas de fluidifier suffisamment les polyoléfines.

L'association des polyoléfines greffées et des acides gras par malaxage présente l'avantage de fluidifier ces polymères sans provoquer la scission des chaînes macromoléculaires. Ceci est important dans la mesure où l'émulsion qui sera réalisée à partir d'un tel mélange entrera dans la composition d'un apprêt pour fibres de verre. En effet, lorsque la matière à renforcer est une polyoléfine à haut poids moléculaire, il est souhaitable de l'associer à des fibres de verre dont l'apprêt comprend une émulsion d'une polyoléfine dont la chaîne macromoléculaire est de structure voisine. Les propriétés mécaniques du produit composite sont alors portées à leur meilleur niveau.

Un autre avantage de cette association est qu'il n'est pas nécessaire d'éliminer l'acide gras après avoir fluidifié la polyoléfine, contrairement à certains ajouts comme les solvants organiques.

D'une manière connue en soi, les fonctions acides portées par la polyoléfine greffée sont neutralisées par une base. Cette base peut être aussi bien organique que minérale. Ainsi, la base présente dans l'émulsion selon l'invention peut être aussi bien un hydroxyde de métal alcalin ou alcalino-terreux, l'hydroxyde d'ammonium ou une amine telle que la diéthyléthanolamine ou la diméthylaminopropanol.

Dans le cadre de l'invention, la base choisie doit être ajoutée en quantité suffisante pour neutraliser également la fonction acide de l'acide gras utilisé.

Un autre avantage de l'invention réside dans le fait que l'émulsion peut être obtenue sans utiliser d'agent émulsifiant. Le rôle d'émulsifiant est joué par l'acide gras neutralisé. Cependant, dans certains cas, pour obtenir une émulsion fine et stable dans le temps, il est parfois utile d'ajouter un agent émulsifiant selon des quantités pouvant atteindre 20 % en poids de la matière solide.

Les agents émulsifiants susceptibles d'être utilisés sont bien connus de l'homme de l'art. Il peut s'agir aussi bien de composés non ioniques que de composés anioniques ou cationiques.

Le procédé permettant de réaliser l'émulsion aqueuse selon l'invention consiste à :

a) malaxer ensemble au moins une polyoléfine greffée et au moins un acide gras saturé et/ou au moins un acide gras insaturé non substitué par un groupement hydroxyle, à une température supérieure au point de fusion de la (ou des) polyoléfine (s) ;

b) additionner au mélange ainsi réalisé au moins une base minérale ou organique, la quantité d'eau nécessaire pour obtenir de 10 à 50 % de matières solides et, éventuellement, un agent émulsifiant ;

c) agiter l'ensemble sous pression et à une température supérieure au point de fusion de la (ou des) polyoléfine (s), puis à refroidir le mélange à une température inférieure audit point de fusion.

Les émulsions aqueuses de polyoléfines, en particulier de polypropylènes, sont la forme la mieux adaptée pour traiter la surface de différents substrats. C'est également le cas des émulsions selon l'invention qui peuvent être utilisées pour imprégner ou revêtir des fibres, des tissus, des films et des matières aussi différentes que le papier, le bois, l'amiante ou un métal. Ces émulsions permettent de rendre une surface hydrophobe, résistante à des produits chimiques ou imperméable aux gaz. Elles peuvent servir, en particulier, d'agent de démoulage.

Une des applications de l'invention est la réalisation d'une composition d'apprêt susceptible d'être déposée à la surface des fibres de verre, en vue de renforcer une polyoléfine.

Cette composition d'apprêt comprend, outre l'émulsion selon l'invention, une série de produits bien connus de l'homme de l'art. Ces produits sont les agents de couplage, habituellement des silanes tel que le gamma-aminopropyltriéthoxysilane, et éventuellement des agents lubrifiants cationiques ou non ioniques, des agents filmogènes et des agents antistatiques ; d'autres produits peuvent entrer dans la composition d'un tel apprêt.

Les compositions d'apprêt réalisées à partir des émulsions selon l'invention comprennent de l'ordre de 2 à 15 % en poids de ladite émulsion.

Les exemples et les résultats indiqués et commentés ci-après permettront de mieux apprécier l'invention.

Les mélanges polyoléfine-acide gras sont réalisés dans un malaxeur à fort taux de cisaillement à une température de l'ordre de 170°C. Le mélange obtenu est ensuite refroidi puis broyé.

Le mélange broyé est introduit dans un réacteur avec les différents ingrédients nécessaires à la mise en émulsion de la polyoléfine qu'il comprend. Dans les exemples, donnés à titre illustratif, on ajoute la quantité d'eau désionisée nécessaire pour obtenir une émulsion à 25 % en poids de matières solides. Le réacteur, de forme sphérique, est muni à sa base d'un agitateur dont la vitesse de rotation peut atteindre 650 tours par minute. Ce réacteur est également équipé d'un émulseur à fort taux de cisaillement pouvant tourner jusqu'à 2500 tours par minute.

La vitesse d'agitation et la température du mélange contenu dans le réacteur sont augmentées progressivement. Lorsque la température d'environ 170°C est atteinte, l'émulseur est mis en marche pendant 45 minutes environ. Dès que l'émulseur est arrêté, le mélange est refroidi rapidement en maintenant son agitation. L'émulsion est soutirée à environ 45°C.

Dans les exemples suivants d'émulsions obtenues dans ces conditions, la masse moléculaire en poids indiquée pour le polypropylène choisi a été mesurée par la méthode G.P.C. (Gel Permeation Chromatography) en solvant trichlorobenzène, à partir d'un étalonnage utilisant un polypropylène de masse moléculaire bien définie. La répartition granulométrique a été mesurée à l'aide d'un analyseur Coulter Counter, modèle TA2, équipé d'une sonde 30 micromètres.

## EXEMPLE 1

La polyoléfine est un copolymère isotactique éthylène-polypropylène à 3 % en poids d'éthylène, greffé par de l'anhydride maléique, dont la masse moléculaire en poids est de 66.600. 100 parties en poids de ce copolymère sont malaxées avec 30 parties en poids d'acide stéarique.

Le copolymère fluidifié est introduit dans le réacteur en présence de 12,7 parties en poids d'une amine de neutralisation (diméthylaminopropanol), de 7,1 parties en poids d'un premier agent émulsifiant non ionique (octylphénol oxyéthyléné à 9 moles d'oxyde d'éthylène), de 7,1 parties en poids d'un second agent émulsifiant également non ionique (nonylphénol oxyéthyléné à 50 moles d'oxyde d'éthylène).

Le diamètre moyen des particules de l'émulsion obtenue est de 1,8 micromètres ; 21 % des particules mesurées présentent un diamètre supérieur à 2,5 micromètres.

## EXEMPLE 2

La polyoléfine est identique à celle de l'exemple 1. L'acide stéarique est remplacé par l'acide laurique selon les mêmes proportions.

La neutralisation de la polyoléfine fluidifiée est assurée par 10,2 parties en poids de diméthylamino 2 méthyl 2 propanol 1. Le couple d'agents émulsifiants est identique en nature et en proportions respectives.

Le diamètre moyen des particules de l'émulsion obtenue est de 2,6 micromètres ; 55 % des particules mesurées présentent un diamètre supérieur à 2,5 micromètres.

## EXEMPLE 3

La polyoléfine fluidifiée est identique à celle de l'exemple précédent. L'amine de neutralisation est également la même en nature et en quantité. Les deux agents émulsifiants sont remplacés par 14,2 parties en poids de nonylphénol oxyéthyléné à 100 moles d'oxyde d'éthylène.

Le diamètre moyen des particules de l'émulsion obtenue est de 2,4 micromètres ; 49 % des particules mesurées présentent un diamètre supérieur à 2,5 micromètres.

## EXEMPLE 4

La polyoléfine est un copolymère isotactique éthylène polypropylène à 2 % en poids d'éthylène, greffé par de l'anhydride maléique, dont la masse moléculaire en poids est de 76.900. 100 parties en poids de ce copolymère sont malaxées avec 20 parties en poids d'acide stéarique.

L'amine de neutralisation est identique à celle utilisée dans les exemples 2 et 3. Elle est introduite à raison de 13 parties en poids. Les agents émulsifiants utilisés sont identiques en nature et en poids à ceux des exemples 1 et 2.

Le diamètre moyen des particules de l'émulsion obtenue est de 20 micromètres ; 97 % des particules mesurées présentent un diamètre supérieur à 2,5 micromètres.

## EXEMPLE 5

Les différents constituants utilisés sont identiques à ceux de l'exemple précédent, seule différence, la quantité d'acide stéarique est de 30 parties en poids.

Le diamètre moyen des particules de l'émulsion obtenue est de 3,4 micromètres ; 70 % des particules mesurées présentent un diamètre supérieur à 2,5 micromètres.

## EXEMPLE 6

La polyoléfine est un polypropylène homopolymère isotactique, greffé par de l'anhydride maléique, dont la masse moléculaire en poids est de 71.200. 100 parties en poids de cet homopolymère sont malaxées avec 25 parties en poids d'acide stéarique.

L'ensemble est neutralisé par 16,2 parties en poids de l'amine utilisée dans l'exemple 2. Un couple d'agents émulsifiants, identiques à ceux de l'exemple 2, sont utilisés à raison de 6,9 parties en poids pour chacun d'entre eux.

Les particules de l'émulsion obtenue présentent un diamètre moyen de 2 micromètres ; 38 % des particules mesurées présentent un diamètre supérieur à 2,5 micromètres.

## EXEMPLE 7

Tous les ingrédients utilisés sont identiques à ceux employés dans l'exemple précédent. Seules diffèrent les proportions du mélange.

A 100 parties en poids d'homopolymère sont associées 10 parties en poids d'acide stéarique, 7,5 parties en poids d'amine et 6 parties en poids de chaque agent émulsifiant.

Le polymère n'a pu être mis en émulsion que partiellement ; l'émulsion obtenue est très grossière. Le reste du polymère forme une suspension de grains irréguliers cristallisés.

## EXEMPLE 8

Les ingrédients utilisés sont identiques à ceux décrits dans l'exemple 6. Leurs proportions sont les suivantes : à 100 parties en poids d'homopolymère sont as sociées 30 parties en poids d'acide stéarique, 12,7 parties en poids d'amine et 7,1 parties en poids de chaque agent émulsifiant.

L'émulsion obtenue est formée de particules dont le diamètre moyen est de 2,5 micromètres ; 50 % des particules mesurées présentent un diamètre supérieur à cette valeur.

## EXEMPLE 9

La polyoléfine choisie est un polypropylène homopolymère isotactique, greffé par de l'anhydride maléique, dont la masse moléculaire en poids est de 51.500.

100 parties en poids de cet homopolymère sont malaxées avec 20 parties en poids d'acide stéarique.

L'ensemble est neutralisé par 12,1 parties en poids de l'amine utilisée dans l'exemple 2. Les deux agents émulsifiants de cet exemple sont introduits à raison de 3 parties en poids pour chacun d'entre eux.

Le diamètre moyen des particules de l'émulsion est de 1,7 micromètres ; 21 % des particules mesurées présentent un diamètre supérieur à 2,5 micromètres.

## EXEMPLE 10

100 parties en poids du polypropylène de l'exemple précédent sont malaxées avec 30 parties en poids d'acide stéarique.

L'ensemble est neutralisé par 7,1 parties en poids de potasse. Il n'y a pas d'agent émulsifiant.

Le diamètre moyen des particules de l'émulsion est de 5,8 micromètres ; 80 % des particules mesurées présentent un diamètre supérieur à 2.5 micromètres.

## EXEMPLE 11

Le mélange expérimenté est voisin de l'exemple précédent. 100 parties en poids du polypropylène de l'exemple 9 sont malaxées avec 20 parties en poids d'acide stéarique. La base de neutralisation est la diéthyléthanol amine introduite à raison de 14,4 parties en poids.

Comme dans l'exemple 10, le mélange ne contient pas d'agent émulsifiant.

Le diamètre moyen des particules de l'émulsion est de 3,4 micromètres ; 70 % des particules mesurées présentent un diamètre supérieur à 2,5 micromètres.

## EXEMPLE 12

Les constituants de ce mélange sont identiques en nature et en proportions à ceux de l'exemple 9, sauf l'acide gras utilisé. Celui-ci est l'acide ricinoléique dont 30 parties en poids sont malaxées avec 100 parties en poids de polypropylène.

L'émulsification du polypropylène n'a pu être obtenue malgré une teneur en acide gras nettement supérieure à celle de l'acide stéarique utilisée dans l'exemple 9. Une suspension de grains irréguliers de polypropylène cristallisé a été recueillie à la sortie du réacteur.

Les émulsions aqueuses selon l'invention sont avantageusement utilisées pour réaliser des apprêts susceptibles d'être déposés à la surface de fibres de verre, destinées à renforcer des polyoléfines.

Les émulsions selon l'invention peuvent être associées sans difficulté avec les constituants classiques des compositions d'apprêt pour fibres de verre.

Ces compositions comprennent généralement un agent de couplage qui est le plus souvent un silane, de préférence aminé ; un agent filmogène choisi parmi les polyesters, les polyuréthannes, les acryliques, les acétates de polyvinyle, les polymères époxy ; un agent lubrifiant de préférence non ionique ou cationique ; éventuellement, d'autres constituants comme un agent mouillant, un agent antistatique.

Les particules de l'émulsion selon l'invention peuvent représenter d'environ 2 à 15 % en poids de la composition d'apprêt. La quantité d'apprêt déposée sur les fils de verre est comprise entre environ 0,1 et 5 %, le plus fréquemment entre 0,2 et 1,5 %.

La composition d'apprêt comprenant l'émulsion selon l'invention peut être déposée sur les fibres de verre par tout moyen connu de l'homme de l'art. Elle peut être déposée aussi bien au moment de la formation des fibres de verre qu'à un stade ultérieur. Les fibres de verre ainsi traitées peuvent être utilisées sous des présentations très variées pour renforcer les polyoléfines : mèches ou fils continus, mats formés de fils coupés ou de fils continus, voiles.

A titre d'exemples comparatifs, deux compositions d'apprêt ont été réalisées.

La première, qui sert de référence, comprend une émulsion connue sous la référence PPRL 3974, commercialisée par la Société PROCTOR CHEMICAL. Il s'agit d'un polypropylène dont la masse moléculaire en poids est inférieure à 10.000.

Cette composition comprend les constituants suivants, selon des teneurs exprimées en pourcentages pondéraux par rapport au poids total de matières sèches :
- 1 % de gamma-aminopropyltriéthoxysilane;
- 6 % de l'émulsion précitée.

La seconde composition comprend les constituants suivants, selon des teneurs exprimées comme précédemment :
- 1 % de gamma-aminopropyltriéthoxysilane,
- 6 % de l'émulsion selon l'exemple 1.

Ces apprêts ont été déposés sur des fibres de verre dont le diamètre moyen est de 13 micromètres. Les pertes au feu des fils, formés des fibres ainsi traitées, sont d'environ 0,8 %. Lesdits fils ont été utilisés sous forme de fils coupés pour renforcer, à raison de 30 % en poids de verre, deux matières à base de polyoléfines.

La première matière est constituée d'un polypropylène commercialisé par la Société APPRYL sous la référence APPRYL 3030 P.

La seconde matière est constituée du polypropylène précédent auquel a été ajouté 1 % en poids d'un polypropylène isotactique commercialisé par la Société HIMONT sous la référence HERCOPRIME G.

Les valeurs mesurées de différentes propriétés mécaniques de ces matières renforcées sont consignées dans le tableau joint en annexe.

Les contraintes à rupture en traction, en flexion, les résistances au choc CHARPY et IZOD ont été mesurées dans les conditions définies respectivement par les normes AFNOR NFT 57101, AFNOR NFT 51001, AFNOR NFT 51035 et ISO R 180.

## TABLEAU

| | Matière 1 (APPRYL 3030 P) | | Matière 2 (APPRYL 3030 P + 1 % HERCOPRIME G) | |
|---|---|---|---|---|
| | Apprêt de référence | Apprêt selon l'invention | Apprêt de référence | Apprêt selon l'invention |
| Contrainte à la rupture en traction (Mpa) | 65 | 76 | 80 | 90 |
| Contrainte à la rupture en flexion (MPa) | 95 | 110 | 120 | 130 |
| Choc Charpy non entaillé (KJ/m²) | 15 | 19 | 25 | 33 |
| Choc Izod entaillé (J/m) | 90 | 120 | 110 | 140 |

## Revendications

1. Emulsion aqueuse réalisée à partir de polyoléfine (s) greffée (s), destinée au traitement de la surface d'un substrat, qui comprend un mélange formé d'au moins une polyoléfine greffée qui présente une masse moléculaire en poids supérieure à 10.000 et d'au moins un acide gras saturé et/ou d'au moins un acide gras insaturé non-substitué par un groupement hydroxyle, au moins une base, de l'eau en quantité nécessaire pour obtenir de 10 à 50 % de matières solides et, éventuellement un agent émulsifiant.

2. Emulsion aqueuse selon la revendication 1, **caractérisée en ce que** le mélange de polyoléfine (s) et d'acide (s) gras contient entre 10 et 50 parties en poids d'acide (s) pour 100 parties en poids de polyoléfine (s).

3. Emulsion aqueuse selon la revendication 1, **caractérisée en ce que** la (ou les) polyoléfine (s) du mélange présente (nt) une masse moléculaire en poids supérieure à environ 30.000.

4. Emulsion aqueuse selon la revendication 1, **caractérisée en ce que** la (ou les) polyoléfine (s) mélangée (s) à (ou aux) acide (s) gras sont des polypropylènes homopolymères et/ou des polypropylènes copolymères.

5. Emulsion aqueuse selon les revendications 3 et 4, **caractérisée en ce que** le mélange comprend au moins une polyoléfine greffée par les acides ou les anhydrides maléique, acrylique, méthacrylique ou par des oxirannes tels que l'acrylate ou le méthacrylate de glycidyle.

6. Procédé d'obtention d'une émulsion aqueuse, à partir d'au moins une polyoléfine, destinée au traitement de la surface d'un substrat, qui consiste :
   - à malaxer ensemble une (ou des) polyoléfine (s) greffée (s) et au moins un acide gras saturé et/ou au moins un acide gras insaturé non-substitué par un groupement hydroxyle, à une température supérieure au point de fusion de la (ou des) polyoléfine (s),
   - à additionner au mélange réalisé précédemment au moins une base minérale telle que la soude, la potasse ou la chaux, ou une base organique, telle l'ammoniaque ou une amine, la quantité d'eau nécessaire pour obtenir de 10 à 50 % de matières solides et, éventuellement un agent émulsifiant choisi parmi les agents anioniques, cationiques et non ioniques,
   - à agiter l'ensemble sous pression et à une température supérieure au point de fusion de la (ou des) polyoléfine (s) puis à refroidir le mélange à une température inférieure audit point de fusion.

7. Procédé selon la revendication 6, **caractérisé en ce que** la quantité d'acide (s) gras mélangée à la (aux) polyoléfine (s) est d' 10 à 50 parties en poids pour 100 parties en poids de polyoléfine (s), et de préférence, de 15 à 30 parties en poids.

8. Procédé selon l'une des revendications 6 et 7, **caractérisé en ce qu'**on ajoute au moins un agent émulsifiant dans des proportions pondérales pouvant atteindre 20 parties en poids pour 100 parties en poids de polyoléfine (s).

9. Procédé selon l'une des revendications 6 et 7, **caractérisé en ce qu'**on malaxe un ou plusieurs polypropylènes homopolymères ou copolymères greffés, en présence d'acide stéarique à une température supérieure à 150°C.

10. Composition d'apprêt destinée à être déposée à la surface de fibres, notamment de fibres continues de verre, **caractérisée en ce qu'**elle comprend une émulsion aqueuse définie par l'une quelconque des revendications 4 et 5, un agent de pontage tel qu'un aminosilane et, éventuellement, un agent filmogène, un agent lubrifiant et un agent anti-statique.


**Patentansprüche**

1. Wäßrige Emulsion, ausgehend von gepropften Polyolefin(en) und bestimmt zur Behandlung der Oberfläche eines Substrats, welche eine aus wenigstens einem gepfropften Polyolefin, das ein Gewichtsmittel-Molekulargewicht von mehr als 10.000 hat, und wenigstens einer gesättigten Fettsäure und/oder wenigstens einer nicht durch eine Hydroxylgruppe substituierten ungesättigten Fettsäure, wenigstens einer Base, Wasser in einer zur Erzielung eines Feststoffgehaltes von 10 bis 50 % notwendigen Menge und gegebenenfalls einem Emulgiermittel gebildete Mischung enthält.

2. Wäßrige Emulsion nach Anspruch 1, dadurch gekennzeichnet, daß die Mischung aus Polyolefin(en) und Fettsäure(n) zwischen 10 und 50 Gewichtsteile Säure(n) auf 100 Gewichtsteile Polyolefin(e) enthält.

3. Wäßrige Emulsion nach Anspruch 1, dadurch gekennzeichnet, daß das (oder die) Polyolefin(e) der Mischung ein Gewichtsmittel-Molekulargewicht von mehr als etwa 30.000 hat (haben).

4. Wäßrige Emulsion nach Anspruch 1, dadurch gekennzeichnet, daß das (oder die) mit Fettsäure(n) gemischte (n) Polyolefin(e) Polypropylenhomopolymere und/oder Polypropylencopolymere sind.

5. Emulsion nach Anspruch 3 und 4, dadurch gekennzeichnet, daß die Mischung wenigstens ein mit Malein-, Acryl-, Methacrylsäuren oder -anhydriden oder mit Oxiranen, wie Glycidylacrylat oder -methacrylat, gepfropftes Polyolefin enthält.

6. Verfahren zur Erzeugung einer wäßrigen Emulsion, ausgehend von wenigstens einem Polyolefin und bestimmt zur Behandlung der Oberfläche eines Substrats, das
   - im Zusammenkneten von Pfropfpolyolefin(en) und wenigstens einer gesättigten Fettsäure und/oder wenigstens einer nicht durch eine Hydroxylgruppe substituierten ungesättigten Fettsäure bei einer Temperatur oberhalb des Schmelzpunkts von dem (oder den) Polyolefin(en),
   - in der Zugabe zur zuvor hergestellten Mischung wenigstens einer mineralischen Base, wie Soda, Pottasche oder Kalk, oder einer organischen Base, wie Ammoniak oder einem Amin, der zur Erzielung eines Feststoffgehalts von 10 bis 50 % erforderlichen Menge Wasser und gegebenenfalls eines aus anionischen, kationischen und nichtionischen Mitteln ausgewählten Emulgiermittels,
   - im Rühren des Ganzen unter Druck bei einer Temperatur oberhalb des Schmelzpunkts von dem (oder den) Polyolefin(en) und danach in der Abkühlung der Mischung auf eine Temperatur unterhalb des Schmelzpunkts besteht.

7. Verfahren nach Anspruch 6, dadurch gekennzeichnet, daß die Menge an Fettsäure(n), die mit dem (den) Polyolefin(en) gemischt wird (werden), 10 bis 50 Gewichtsteile auf 100 Gewichtsteile Polyolefin(e) und vorzugsweise 15 bis 30 Gewichtsteile ausmacht.

8. Verfahren nach einem der Ansprüche 6 und 7, dadurch gekennzeichnet, daß man wenigstens ein Emulgiermittel in Gewichtsanteilen zufügt, die 20 Gewichsteile auf 100 Gewichtsteile Polyolefin(e) ausmachen.

9. Verfahren nach einem der Ansprüche 6 und 7, dadurch gekennzeichnet, daß man ein oder mehrere gepfropfte Polypropylenhomopolymere oder -copolymere in Gegenwart von Stearinsäure bei einer Temperatur oberhalb von 150° C zusammenknetet.

10. Appreturmischung zur Aufbringung auf die Oberfläche von Fasern, insbesondere Glasendlosfasern, dadurch gekennzeichnet, daß sie eine wäßrige Emulsion, definiert nach einem der Ansprüche 4 und 5, ein Verbrückungsmittel wie ein Aminosilan, und gegebenenfalls ein filmbildendes Mittel, ein Schmiermittel und ein Antistatikmittel enthält.

## Claims

1. Aqueous emulsion produced from grafted polyolefin(s), for treating the surface of a substrate, and comprising a mixture formed of at least one grafted polyolefin having a molecular weight which is greater than 10,000 and at least one saturated fatty acid and/or at least one unsaturated fatty acid not substituted by an hydroxyl group, at least one base, water in sufficient quantity for obtaining 10 to 50% of solid matter, and optionally an emulsifier.

2. Aqueous emulsion according to Claim 1, characterised in that the polyolefin and fatty acid mixture contains between 10 and 50 parts by weight of acid per 100 parts by weight of polyolefin.

3. Aqueous emulsion according to Claim 1, characterised in that the polyolefin(s) in the mixture has (have) a molecular weight which is greater than approximately 30,000.

4. Aqueous emulsion according to Claim 1, characterised in that the polyolefin(s) mixed with the fatty acid(s) is (are) homopolymer polypropylenes and/or copolymer polypropylenes.

5. Aqueous emulsion according to one of Claims 3 and 4, characterised in that the mixture comprises at least one polyolefin grafted by maleic, acrylic or methacrylic acids or anhydrides or by oxiranes such as glycidyl methacrylate or acrylate.

6. Process for obtaining an aqueous emulsion from at least one polyolefin for treating the surface of a substrate, which consists in:
   - mixing together one or more grafted polyolefins and at least one saturated fatty acid and/or at least one unsaturated fatty acid not substituted by an hydroxyl group at a temperature which is greater than the polyolefin melting point;
   - adding to the mixture previously produced at least one mineral base such as soda, potash or lime, or an organic base such as ammonia or an amine, the amount of water sufficient for obtaining 10 to 50% of solid matter and optionally an emulsifier selected from the group comprising anionic, cationic and non-ionic agents;
   - agitating the pressurised mixture at a temperature which is greater than the polyolefin melting point then cooling the mixture to a temperature which is lower than the said melting point.

7. Process according to Claim 6, characterised in that the amount of fatty acid(s) mixed with the polyolefin(s) is approximately 10 to 50 parts by weight per 100 parts by weight of polyolefin(s) and is preferably between 50 and 30 parts by weight.

8. Process according to either of Claims 6 and 7, characterised in that at least one emulsifier is added in weight proportions which can amount to 20 parts by weight per 100 parts by weight of polyolefin(s).

9. Process according to either of Claims 6 and 7, characterised in that one or a plurality of grafted copolymer or homopolymer polypropylenes is mixed in the presence of stearic acid at a temperature which is greater than 150°C.

10. Primer composition to be applied to the surface of fibres, in particular continuous glass fibres, characterised in that it comprises an aqueous emulsion defined by either of Claims 4 and 5, a coupling agent such as an aminosilane, and optionally a film-forming agent, a lubricant and an anti-static agent.